# EUROPEAN PATENT APPLICATION

(11) **EP 3 816 834 A1**
(43) Date of publication of application: **05.05.2021**
(21) Application number: 19827183.5
(22) Date of filing: 18.06.2019
(51) Int. Cl.: G06F 21/62, G06Q 50/10

(54) **SERVICE SUPPORT SYSTEM AND SERVICE SUPPORT METHOD**

(30) Priority: 27.06.2018 JP 2018121642
(71) Applicant: Hitachi, Ltd., Tokyo 100-8280 (JP)
(72) Inventor: SUZUKI, Takayuki, Tokyo 100-8280 (JP); YOSHINO, Masayuki, Tokyo 100-8280 (JP); HATOGAI, Tetsuhiro, Tokyo 100-8280 (JP); TANIZAKI, Masaaki, Tokyo 100-8280 (JP)
(74) Representative: MERH-IP Matias Erny Reichl Hoffmann Patentanwälte PartG mbB
(86) International application number: PCT/JP2019/024063
(87) International publication number: WO 2020/004137

(57) **Abstract**

A service support system comprises a data user request obtaining part 41 that obtains a predetermined data provision request from a predetermined terminal, a personal information obtaining part 42 that obtains personal information on a requester of the data provision request, a providable data obtaining part 43 that obtains predetermined providable data from a predetermined terminal, a processed data generating part 44 that generates processed data which is data of a response to the data provision request by processing the obtained providable data based on the obtained personal information on the requester, and a communication restricting part 49 that restricts transmission of the obtained data provision request, the obtained personal information on the requester, and the generated processed data to outside of the processed data generating part 44.

## Description

### [Technical Field]

The present invention relates to a service support system and a service support method.

### [BACKGROUND ART]

### Incorporation by reference

This application claims priority from Japanese Patent Application No. 2018-121642, filed on June 27, 2018, the entire contents of which are incorporated herein by reference.

With the recent progress of information technology (IT), the evolution of artificial intelligence, and so on, it is becoming possible to collect massive data and analyze and utilize the massive data. Against this background, the establishment of a business operation of a so-called information bank which enables large-scale utilization of personal information received from individuals or corporations is being considered.

Various approaches have been proposed for the utilization of personal information in various business operations. For example, PTL 1 describes a personal information management and operation system that includes a personal information database which accumulates and manages various kinds of information on users, and a personal service agent which provides various services to users based on the information managed by the personal information database and others by using a computer network. The personal service agent searches for and collects information for each user, processes the collected information according to the user, transmits the processed data to the user, selects and proposes information suitable for the user from the collected information, and assists the user to actually utilize the proposed information.

### [Citation List]

### [Patent Literature]

[PTL 1] Japanese Patent Application Publication No. 2005-157672

### [Summary of Invention]

### [Technical Problem]

In one of conceivable business operations utilizing personal information by an information bank, the information bank provides personal information on a customer held by the information bank in response to an inquiry from a business operator, and the business operator provides a service to the customer based on the result. However, to carry out such business operation, a mechanism to prevent leakage of the personal information on customers to the outside is indispensable. In particular, for the characteristic of the information bank which manages massive personal information, it is necessary to surely prevent the leakage of the personal information.

The present invention has been made in view of such background, and an object of the present invention is to provide a service support system and a service support method which are capable of supporting a service to be provided by a business operator while preventing unnecessary transmission of personal information to outside.

### [Solution to Problem]

One of the present inventions to solve the above problem is a service support system comprising a data user request obtaining part that obtains a predetermined data provision request from a predetermined terminal, a personal information obtaining part that obtains personal information on a requester of the data provision request, a providable data obtaining part that obtains predetermined providable data from a predetermined terminal, a processed data generating part that generates processed data which is data of a response to the data provision request by processing the obtained providable data based on the obtained personal information on the requester, and a communication restricting part that restricts transmission of the obtained data provision request, the obtained personal information on the requester, and the generated processed data to outside of the processed data generating part.

### [Advantageous Effects of Invention]

According to the present invention, it is possible to support a service to be provided by a business operator while preventing unnecessary transmission of personal information to outside.

### [Brief Description of Drawings]

[Fig. 1] Fig. 1 is a diagram illustrating an example of a configuration of a service support system in a first embodiment.
[Fig. 2] Fig. 2 is a diagram illustrating an example of hardware equipped in each information processing apparatus.
[Fig. 3] Fig. 3 is a diagram for explaining an example of functions equipped in a user terminal.
[Fig. 4] Fig. 4 is a diagram illustrating an example of a user policy management table.
[Fig. 5] Fig. 5 is a diagram for explaining an example of functions equipped in a holder terminal.
[Fig. 6] Fig. 6 is a diagram illustrating an example of a holder policy management table.
[Fig. 7] Fig. 7 is a diagram for explaining an example of functions equipped in a provider terminal.
[Fig. 8] Fig. 8 is a diagram illustrating an example of a provider policy management table.
[Fig. 9] Fig. 9 is a diagram illustrating an example of functions equipped in a service support apparatus.
[Fig. 10] Fig. 10 is a diagram illustrating an example of a record structure of a data item correspondence table.
[Fig. 11] Fig. 11 is a flow diagram for explaining an example of service support processing.
[Fig. 12] Fig. 12 is a diagram for explaining an example of functions equipped in a service support apparatus in a second embodiment.
[Fig. 13] Fig. 13 is a flow diagram for explaining an example of service support processing in the second embodiment.
[Fig. 14] Fig. 14 is a diagram illustrating an example of a user evaluation screen.
[Fig. 15] Fig. 15 is a diagram illustrating an example of a provider evaluation screen.

### [Description of Embodiments]

### [First Embodiment]

First, a service support system 1 in a first embodiment will be described with reference to the drawings.

### <System Configuration>

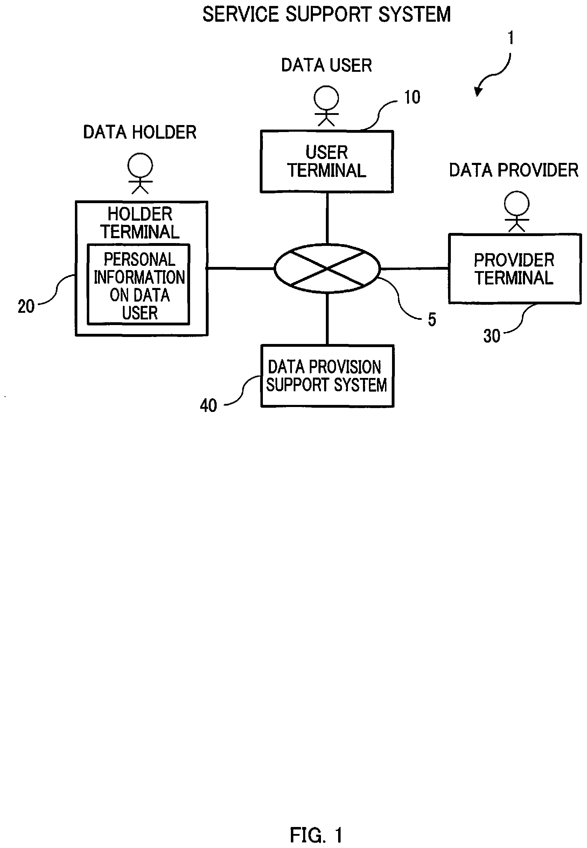

Fig. 1 is a diagram illustrating an example of a configuration of a service support system 1 in the first embodiment. The service support system 1 includes a data provider terminal 30 which stores various kinds of data (hereinafter, referred to as providable data, for example, map information, weather information, and the like) useful for corporations and the like to carry out business operations, and is managed by a business operator who conducts a service to provide the data to customers (hereinafter, referred to as a data provider), a user terminal 10 which is managed by a person who carries out various business operations by using the aforementioned data (hereinafter, referred to as usage data) as appropriate (hereinafter, referred to as a data user, who may be an individual or a corporation), a holder terminal 20 which is managed by a person who manages personal information or corporate information on the data user (both kinds of information are collectively referred to as personal information) (hereinafter, referred to as a data holder) and which stores the personal information, and a service support apparatus 40 which supports data provision from the data provider to the data user. Note that multiple user terminals 10, holder terminals 20, and provider terminals 30 may be provided herein.

The holder terminal 20 is an information processing apparatus managed by, for example, a bank, a credit bureau, a government office, or the like. The personal information stored in the holder terminal 20 contains at least one data item (such as, for example, address, age, mail address, whereabouts, contact information, registration information, and bank checking account number). The service support apparatus 40 is, for example, an information processing apparatus managed by an information bank.

These information processing apparatuses are coupled to each other via, for example, a wired or wireless communication network 5 such as a local area network (LAN), a wide area network (WAN), the Internet, or a dedicated line. Data communications via the communication network 5 are performed in accordance with, for example, predetermined communication protocols capable of encrypting data on the communication path.

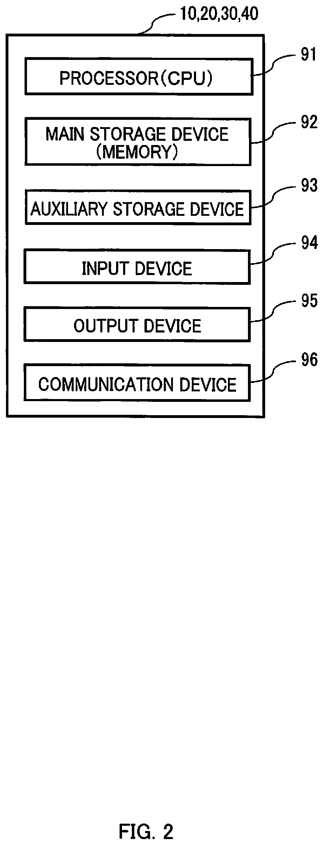

Fig. 2 is a diagram illustrating an example of hardware equipped in each of the information processing apparatuses. Each of the information processing apparatuses includes a processor 91 such as a central processing unit (CPU), a main storage device 92 such as a random access memory (RAM) and a read-only memory (ROM), an auxiliary storage device 93 such as a hard disk drive (HDD) and a solid state drive (SSD), an input device 94 including a keyboard, a mouse, a touch panel, and so on, an output device 95 including a monitor (display) and so on, and a communication device 96 that performs communications with the other information processing apparatuses.

### <<Functions>>

Next, functions equipped in each of the information processing apparatuses are described.

### <User Terminal 10>

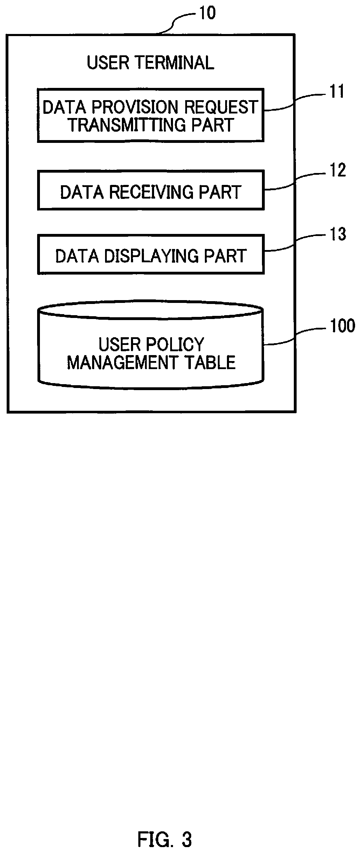

Fig. 3 is a diagram for explaining an example of functions equipped in the user terminal 10. The user terminal 10 includes a data provision request transmitting part 11, a data receiving part 12, and a data displaying part 13.

The data provision request transmitting part 11 transmits information requesting provision of usage data (hereinafter, referred to as a data provision request) to the service support apparatus 40. The data receiving part 12 receives various kinds of data from the service support apparatus 40. The data displaying part 13 outputs the data received by the data receiving part 12 to the output device 95.

The user terminal 10 stores a user policy management table 100.

### (User Policy Management Table 100)

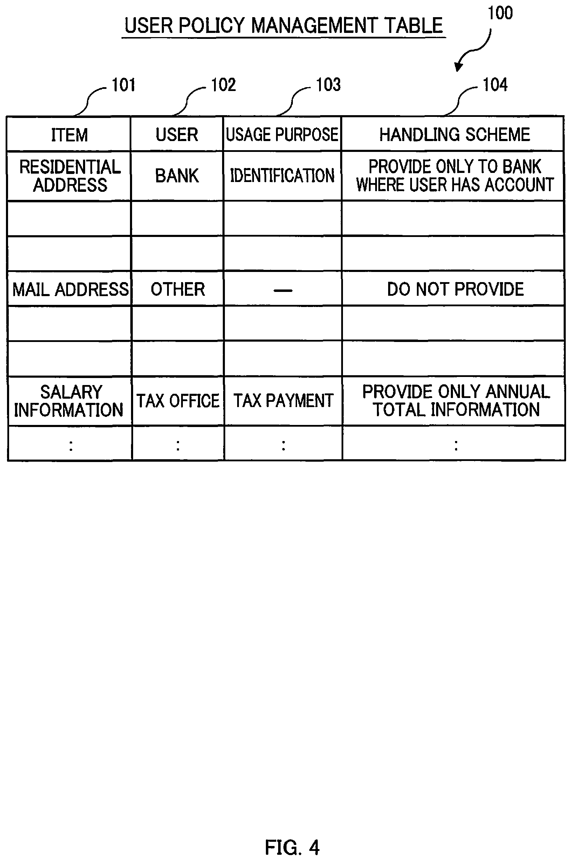

Fig. 4 is a diagram illustrating an example of the user policy management table 100. The user policy management table 100 is a table that stores user policy, which is a restriction concerning a requester of a data provision request (data user), and includes at least one record containing an item column 101 which stores a data item of the personal information on the data user to be referred to in response to a request of data, a user column 102 which stores identification information of the data user (hereinafter referred to as user ID), a usage purpose column 103 which stores a purpose allowed as a reason for referring to the personal information in the item column 101, and a handling scheme column 104 which stores a scheme allowed as a scheme of using the personal information in the item column 101. Here, as an item of the user policy management table 100, information on a personal information reference-allowed range may be contained.

The user policy management table 100 is stored in the user terminal 10 in the present embodiment, but may be stored in the service support apparatus 40.

### <Holder Terminal 20>

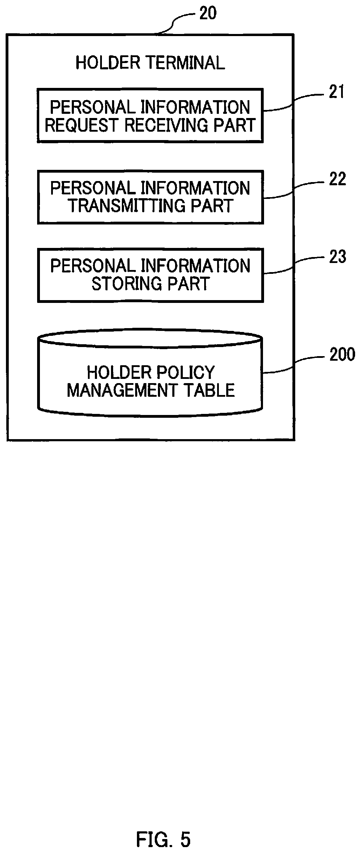

Fig. 5 is a diagram for explaining an example of functions equipped in the holder terminal 20. The holder terminal 20 includes a personal information request receiving part 21, a personal information transmitting part 22, and a personal information storing part 23.

The personal information request receiving part 21 receives information requesting personal information on a data user (hereinafter referred to as a personal information request) from the service support apparatus 40. The personal information transmitting part 22 provides (transmits) the personal information to the service support apparatus 40 in response to the personal information request. The personal information storing part 23 stores the personal information on data users, for example, on a data user-by-data user basis.

The holder terminal 20 stores a holder policy management table 200.

### (Holder Policy Management Table 200)

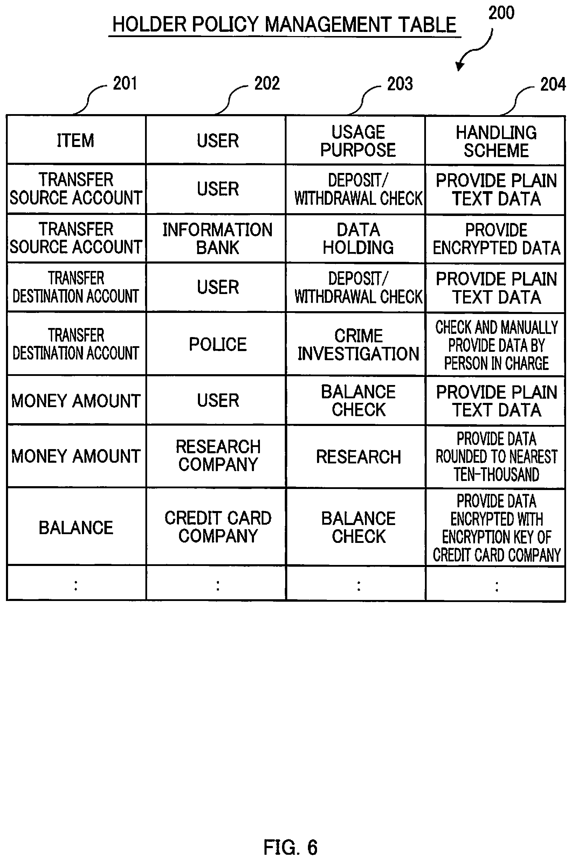

Fig. 6 is a diagram illustrating an example of the holder policy management table 200. The holder policy management table 200 is a table that stores holder policy, which is a restriction concerning a manager (data holder) who manages information on a requester of a data provision request (the personal information on the data user) and includes at least one record containing an item column 201 which stores a data item of the personal information, a user column 202 which stores identification information of the data user (hereinafter referred to as user ID), a usage purpose column 203 which stores a purpose allowed as a reason for providing the personal information in the item column 201, and a handling scheme column 204 which stores a method of providing the personal information in the item column 201.

The handling scheme column 204 stores, for example, an instruction to provide personal information encrypted or anonymized, a specification of an encryption key to be used for encryption, an instruction to provide the personal information in which a numeric value is processed (such as numeric value rounding), an instruction to provide the personal information unprocessed (provide it in plain text), a specification of a range of provision of personal information, and so on. In addition, in the handling scheme column 204, a range of provision of personal information depending on a reliability of the service support apparatus 40 (for example, the reliability of equipment of the service support apparatus 40 and a range of provision of personal information depending on a reward to be paid by the data provider may be set.

Here, the holder policy management table 200 is updated, for example, at predetermined timing (for example, at a predetermined time point, at predetermined time intervals, or upon input of data by the data holder).

The holder policy management table 200 is stored in the holder terminal 20 in the present embodiment, but may be stored in the service support apparatus 40.

### <Provider Terminal 30>

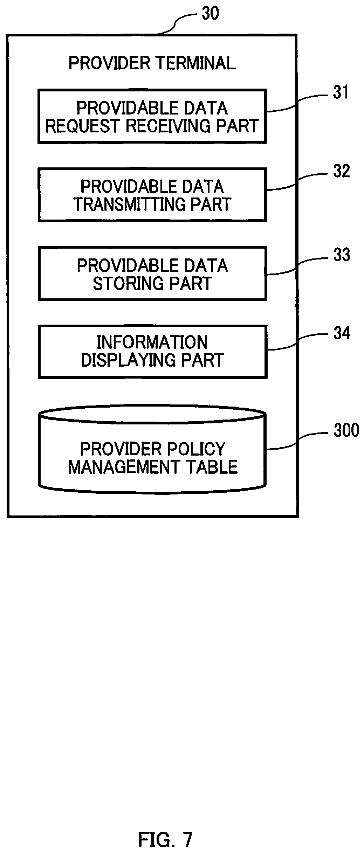

Fig. 7 is a diagram for explaining an example of functions equipped in the provider terminal 30. The provider terminal 30 includes a providable data request receiving part 31, a providable data request transmitting part 32, a providable data storing part 33, and an information displaying part 34.

The providable data request receiving part 31 receives a request to transmit providable data from the service support apparatus 40. The providable data request transmitting part 32 transmits the providable data based on the received request to the service support apparatus 40. The providable data storing part 33 stores the providable data. The information displaying part 34 displays various kinds of information.

The provider terminal 30 stores a provider policy management table 300.

### (Provider Policy Management Table 300)

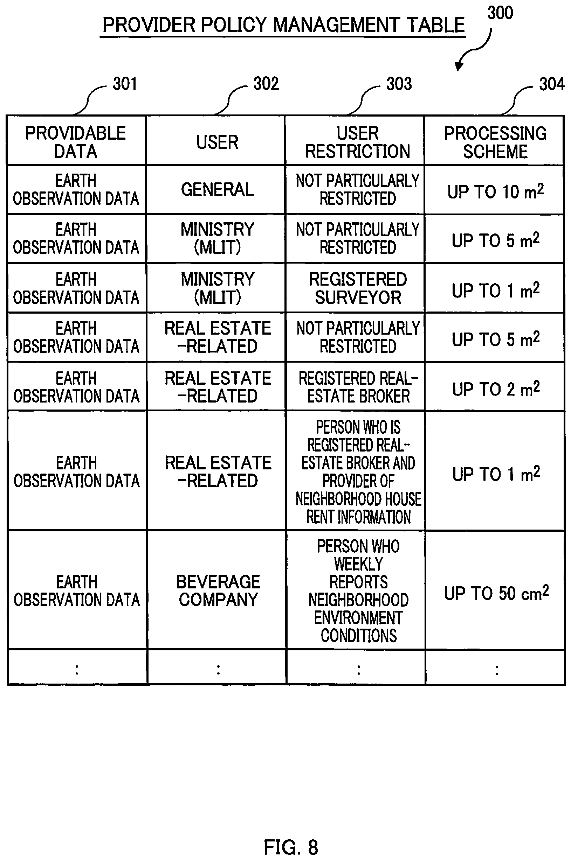

Fig. 8 is a diagram illustrating an example of the provider policy management table 300. The provider policy management table 300 is a table that stores provider policy, which is a restriction concerning a provider of providable data (data provider), and includes items named a providable data column 301 which stores information indicating a kind of providable data, a user column 302 which stores a type of a data user to whom the providable data in the providable data column 301 (the providable data stored in the provider terminal 30) is to be provided, a user restriction column 303 which stores a detailed condition of the data user to whom the providable data in the providable data column 301 is to be provided, and a processing scheme column 304 which stores a data processing scheme required to be used by the service support apparatus 40 for the providable data in the providable data column 301.

The user column 302 and the user restriction column 303 contain predetermined kinds of personal information on a data user. In addition, the processing scheme column 304 stores, for example, an instruction to delete a part of the personal information, an instruction to abstract or encrypt the personal information, an instruction to encrypt part or all of the personal information such that the part or all cannot be decrypted by a data user, a specification of the reliability of a data user to whom the providable data can be provided, a specification of the minimum cost required from a data user (this may be a specification of a profit ratio or the like), and the like.

The provider policy management table 300 is stored in the provider terminal 30 in the present embodiment, but may be stored in the service support apparatus 40.

### <Service Support Apparatus 40>

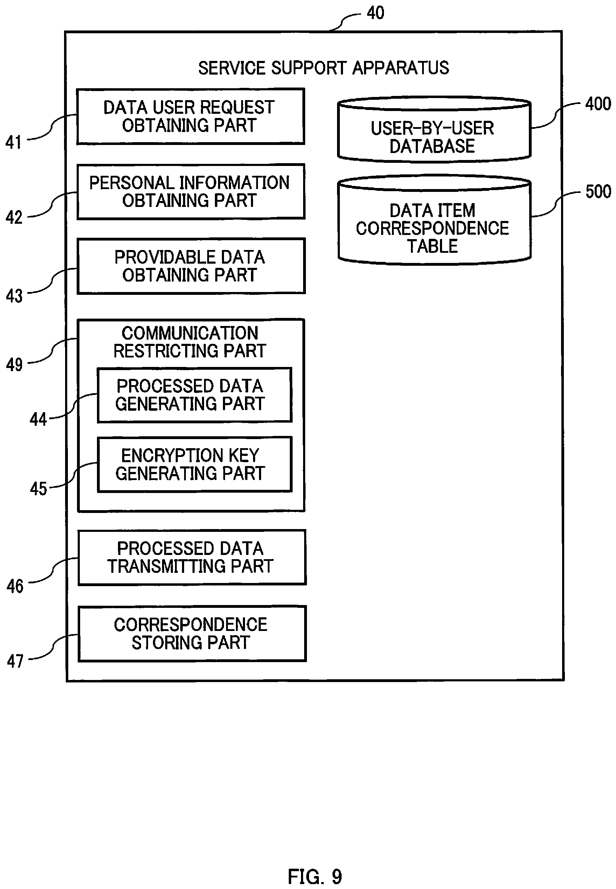

Fig. 9 is a diagram illustrating an example of functions equipped in the service support apparatus 40. The service support apparatus 40 includes a data user request obtaining part 41, a personal information obtaining part 42, a providable data obtaining part 43, a processed data generating part 44, an encryption key generating part 45, a processed data transmitting part 46, and a correspondence storing part 47.

The data user request obtaining part 41 obtains a data provision request from a predetermined terminal (for example, the user terminal 10).

The personal information obtaining part 42 obtains personal information on a requester (data user) of a data provision request. Specifically, the personal information obtaining part 42 obtains the personal information from the holder terminal 20.

The providable data obtaining part 43 obtains providable data from a predetermined terminal (specifically, the provider terminal 30).

The processed data generating part 44 processes the providable data obtained by the providable data obtaining part 43, based on the personal information on the requester (the personal information on the data user) obtained by the personal information obtaining part 42, thereby generating processed data which is data of a response to the data provision request.

Specifically, the processed data generating part 44 generates the processed data in accordance with the user policy as a restriction concerning the requester (data user) of the data provision request, the provider policy as a restriction concerning the provider (data provider) of the providable data, and the holder policy as a restriction concerning a manager (data holder) who manages the personal information on the requester of the data provision request (the personal information on the data user).

The encryption key generating part 45 generates a predetermined encryption key, transmission of which to outside of the processed data generating part 44 is restricted by a communication restricting part 49. This encryption key is used as follows.

First, the data user request obtaining part 41 obtains the data provision request encrypted with an encryption key generated by the encryption key generating part 45. Then, the personal information obtaining part 42 obtains the personal information on the requester of the data provision request (the personal information on the data user), the personal information encrypted with an encryption key generated by the encryption key generating part 45. The providable data obtaining part 43 obtains the providable data encrypted with an encryption key generated by the encryption key generating part 45. The processed data generating part 44 encrypts the generated processed data with an encryption key generated by the encryption key generating part 45.

In the present embodiment, this encryption key is set for each data user.

Subsequently, after the processed data generating part 44 generates the processed data, the encryption key generating part 45 generates a new encryption key, which is the updated encryption key generated by itself.

The processed data transmitting part 46 transmits the processed data generated by the processed data generating part 44 to the user terminal 10.

The communication restricting part 49 restricts the transmission of the data provision request obtained by the data user request obtaining part 41, the personal information on the requester (the personal information on the data user) obtained by the personal information obtaining part 42, and the processed data generated by the processed data generating part 44 to outside of the processed data generating part 44.

The communication restricting part 49 is implemented by, for example, software or hardware. The hardware implementation of the communication restricting part 49 is done by installing another information processing apparatus or device (for example, a memory or an encryption processor) other than the service support apparatus 40. Meanwhile, the software implementation thereof is done by installing an operating system (OS) different from an OS running on the service support apparatus 40 or installing a virtual OS. This disables even an administrator of the service support apparatus 40 or the like from accessing the content of any of the data provision request, the personal information on the data user, and the processed data unless he/she administers the communication restricting part 49, and thereby enhances the data confidentiality.

The processed data generating part 44 encrypts and stores the personal information on the requester of the data provision request (the personal information on the data user). Specifically, the service support apparatus 40 stores a user-by-user database 400. The user-by-user database 400 encrypts and stores the personal information on the data user received from the holder terminal 20. Here, instead of receiving the contents in the user-by-user database 400 from the holder terminal 20, the service support apparatus 40 itself may store and manage the contents in advance (this is a case where the information bank has received permission to use the personal information on the data user from by the data holder and the data user).

Then, the correspondence storing part 47 stores correspondences between data items used in the provider policy and data items used in the holder policy. Based on this, the processed data generating part 44 identifies the correspondences between the provider policy and the holder policy and generates the processed data in accordance with the provider policy and the holder policy.

The correspondence storing part 47 stores these correspondences in a data item correspondence table 500.

### <Data Item Correspondence Table 500>

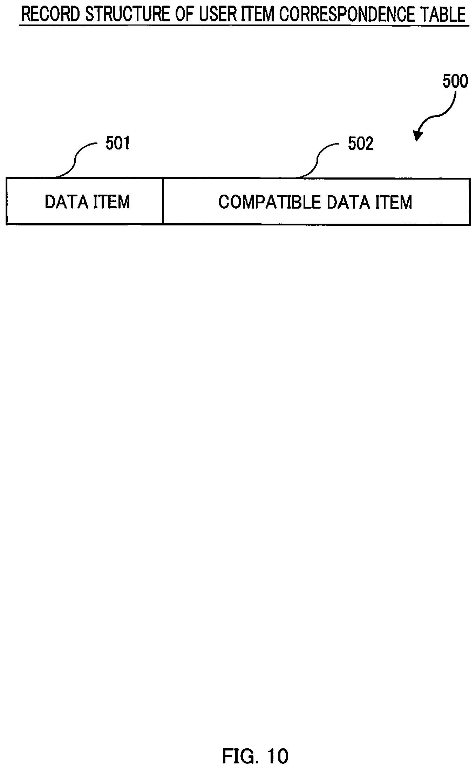

Fig. 10 is a diagram illustrating an example of a record structure of the data item correspondence table 500. The data item correspondence table 500 is a table in which a correspondence (compatibility) between a data item in the provider policy and a data item in the holder policy is established by using a data item defined by the service support apparatus 40, and includes at least one record including items named a data item column 501 which stores a data item defined by the service support apparatus 40 and a compatible data item column 502 which stores a list of data items (the data items in the provider policy or the holder policy) having the correspondence with the data item in the data item column 501.

The aforementioned functions of each information processing apparatus are implemented by the hardware of the information processing apparatus or by the processor 91 of the information processing apparatus loading and executing programs stored in the main storage device 92 and/or the auxiliary storage device 93.

These programs are stored in, for example, a storage device such as a secondary storage device, a non-volatile semiconductor memory, a hard disk drive, and an SSD, or a non-transitory data storage medium readable by the information processing apparatus such as IC card, an SD card, or a DVD.

Next, processing executed in the service support system 1 will be described.

### <<Service Support Processing>>

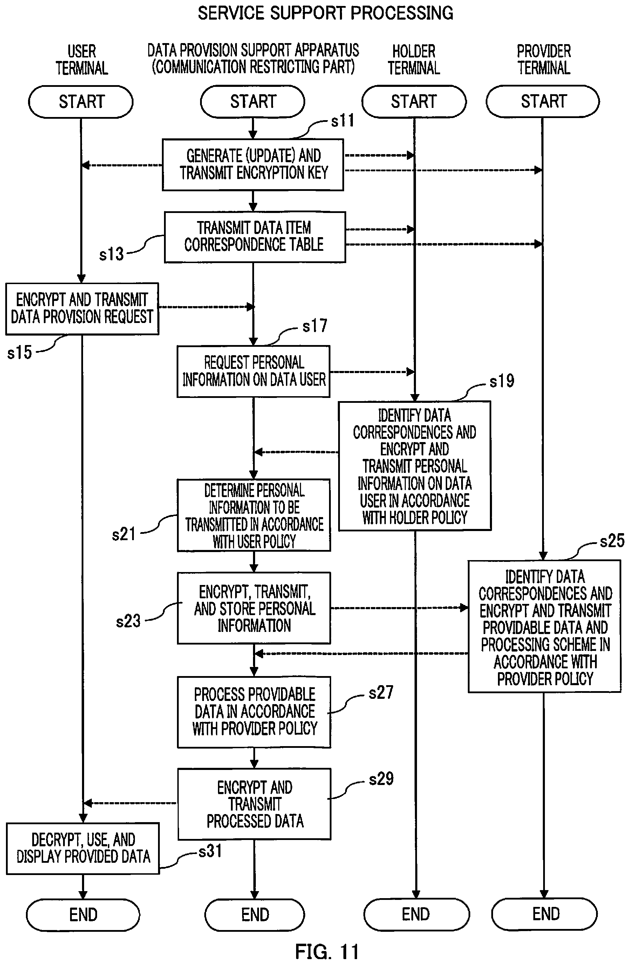

Fig. 11 is a flow diagram for explaining an example of processing in which the service support apparatus 40 generates processed data from the providable data provided from the provider terminal 30 based on the data provision request from the user terminal 10 and returns the processed data to the user terminal 10 (hereinafter, referred to as service support processing).

First, the service support apparatus 40 generates predetermined encryption keys for the user terminal 10 (or the data user) and transmits the encryption keys to the user terminal 10, the holder terminal 20, and the provider terminal 30 (s11). The encryption key in the present embodiment may be an encryption key in a public key cryptosystem or an encryption key in a common key cryptosystem (the same applies below). The service support apparatus 40 stores decryption keys for the encryption keys in the communication restricting part 49.

Moreover, the service support apparatus 40 transmits the data item correspondence table 500 to the holder terminal 20 and the provider terminal 30 (s13). The data item correspondence table 500 may be stored in advance in the holder terminal 20 and the provider terminal 30.

The user terminal 10 encrypts the data provision request with the encryption key and transmits the encrypted request to the service support apparatus 40 (s15). Here, the data provision request is accompanied by an identifier of the data user, data usage purpose, and a data item requested as the usage data (hereinafter, referred to as a requested data item), and the like.

When receiving the data provision request, the service support apparatus 40 decrypts the received data provision request, and encrypts and transmits a request for the personal information on the data user (personal information request) to the holder terminal 20 (sl7). The personal information request is accompanied by the data provision request (containing the identifier of the data user, the data usage purpose, and the requested data item).

When receiving the personal information request, the holder terminal 20 determines the personal information on the data user to be transmitted to the service support apparatus 40, in accordance with the holder policy, and transmits the determined personal information on the data user to the service support apparatus 40 (s19).

Specifically, for example, the holder terminal 20 refers to the holder policy management table 200 to obtain all the records in each of which the identifier of the data user is stored in the user column 202 and the usage purpose attached to the personal information request is stored in the usage purpose column 203, and processes the data item in the personal information on the data user specified in the item column 201 in each of the obtained records according to the instruction specified in the handling scheme column 204 (for example, encrypt it with an encryption key). Then, the holder terminal 20 transmits the processed information (each data item in the personal information) to the service support apparatus 40.

In this process, the holder terminal 20 may select only the personal information containing the data items specified in the data item column 501 or the compatible data item column 502 of the data item correspondence table 500 as the personal information on the data user to be transmitted to the service support apparatus 40. In addition, the holder terminal 20 may convert the data items in the personal information on the data user to the data items specified by the service support apparatus 40 based on the data item correspondence table 500. Specifically, for example, the holder terminal 30 sets, as a new data item for the data item in the personal information, the data item column 501 in the record of the data item correspondence table 500 in which the data item in the personal information is stored in the compatible data item column 502. In this way, the correspondences between the data items specified by the information bank and the data items managed by the data holder can be established.

When receiving the personal information on the data user from the holder terminal 20, the service support apparatus 40 first decrypts the received personal information and then determines the personal information on the data user to be transmitted to the provider terminal 30 in accordance with the user policy (s21).

Specifically, for example, the service support apparatus 40 refers to the user data policy management table 100 of the user terminal 10 to check whether there is a record in which the data item in the personal information received at s21 is stored in the item column 101, the identifier of the data user is stored in the user column 102, and the usage purpose attached to the personal information request is stored in the usage purpose column 103. If there is such a record, the service support apparatus 40 determines whether to provide the personal information on the received data user based on the content in the handling scheme column 104 of that record at s21.

The service support apparatus 40 encrypts the personal information determined to be provided at s21 and transmits the encrypted personal information to the provider terminal 30 (s23). Here, the personal information thus transmitted is accompanied by the data provision request. Moreover, the service support apparatus 40 encrypts the personal information on the data user with an encryption key set on a data user-by-data user basis, and stores the encrypted personal information.

When receiving the personal information on the data user from the service support apparatus 40, the provider terminal 30 determines the providable data and the processing scheme to be transmitted to the service support apparatus 40 in accordance with the provider policy, encrypts the determined providable data and processing scheme with an encryption key, and transmits the encrypted data and method to the service support apparatus 40 (s25).

Specifically, for example, the provider terminal 30 refers to the provider policy management table 300 to find all the records in each of which the personal information on the data user is stored in the user column 302 and the user restriction column 303 and the requested data item specified by the data provision request is stored in the providable data column 301, and determines the contents specified in the providable data column 301 and the processing scheme column 304 of each of the found records as the providable data and the processing scheme to be transmitted to the service support apparatus 40.

Here, in determining whether the personal information on the data user is stored in the user column 302 and the user restriction column 303 of the provider policy management table 300, the provider terminal 30 may convert the data item in the provider policy management table 300 to the data item specified by the information bank. Specifically, for example, each of the data items, which are specified in the compatible data item column 502 of the data item correspondence table 500, in the personal information on the data user specified in the user column 302 and the user restriction column 303 is converted to the data item in the data item column 501 by the provider terminal 30.

The service support apparatus 40 receives the providable data and the processing scheme from the provider terminal 30, decrypts them, and generates the processed data by processing the providable data in accordance with the processing scheme (s27). Specifically, for example, the service support apparatus 40 deletes part of the personal information of the providable data, replaces it with meaningless symbols, or abstracts numeric values.

Then, the service support apparatus 40 encrypts the generated processed data and returns the encrypted processed data to the user terminal 10 (s29). Here, the foregoing processing by the service support apparatus 40 is executed by the communication restricting part 49.

The user terminal 10 decrypts the processed data received from the service support apparatus 40, and stores and displays the decrypted processed data (s31). The data user can make various information analyses and so on based on the processed data thus decrypted. This is the end of the service support processing.

As described above, the service support system 1 of the present embodiment includes the data providing part 12 which generates processed data based on the providable data and the information on the requester of a data provision request (the personal information on the data user), and includes the communication restricting part 19 which restricts transmission of the data provision request, the information on the requester of the data provision request, and the processed data to the outside of the data providing part 12. Thus, when generating the processed data, the service support system 1 is capable of preventing the information containing personal information such as a data provision request and information on a requester of the data provision request from being leaked to the outside. In particular, the communication restricting part 49 prevents leakage to any part other than the processed data generating part 44 in the service support apparatus 40, and therefore makes it possible to disable even the administrator of the service support apparatus 40 or the like from knowing the personal information. Thus, according to the service support system 1 of the present embodiment, it is possible to support a service to be provided by a business operator while preventing unnecessary transmission of personal information to outside.

Here, the service support apparatus 40 may be capable of releasing part or all of the restrictions on data transmission/reception by the communication control unit 49 in response to an input from the administrator or the like. This enables the administrator of the service support apparatus 40 or the like to check the content of the data provision request, the providable data, the processed data, various policies, and the content of the data generated when the processed data is generated, if necessary. In addition, this releasing leads to an improvement of the processing speed, and a reduction of the load applied on the service support apparatus 40.

### [Second Embodiment]

Next, a service support system 1 in a second embodiment will be described with reference to the drawings. In the service support system 1 in the second embodiment, the service support apparatus 40 determines ratings for the data user and the data provider, and provides each of the ratings to the corresponding one (the data provider or the data user). Hereinafter, the service support system 1 in the second embodiment will be described regarding points different from the first embodiment.

### <<Configuration and Functions>>

The service support system 1 has the same system configuration as in the first embodiment.

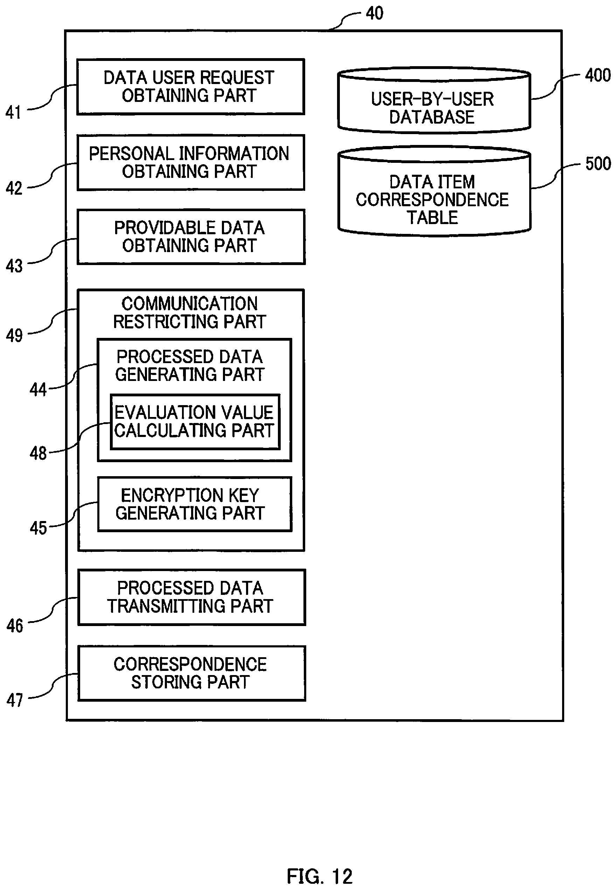

Fig. 12 is a diagram for explaining an example of functions equipped in the service support apparatus 40 in the second embodiment. The processed data generating part 44 of this service support apparatus 40 includes an evaluation value calculating part 48.

Specifically, the evaluation value calculating part 48 receives the personal information on the requester of a data provision request (the personal information on the data user) from the holder terminal 20, and calculates an evaluation value for the requester of the data provision request (the data user) based on the received personal information on the requester or the data provision request. Here, the calculated evaluation value is displayed on the user terminal 10.

In addition, the evaluation value calculating part 48 receives the providable data and the provider policy from the provider terminal 30, and calculates an evaluation value for the provider of the providable data (the data provider) based on the received providable data or provider policy. Here, the calculated evaluation value is displayed on the provider terminal 30.

### <<Service Support Processing>>

Next, service support processing in the second embodiment will be described.

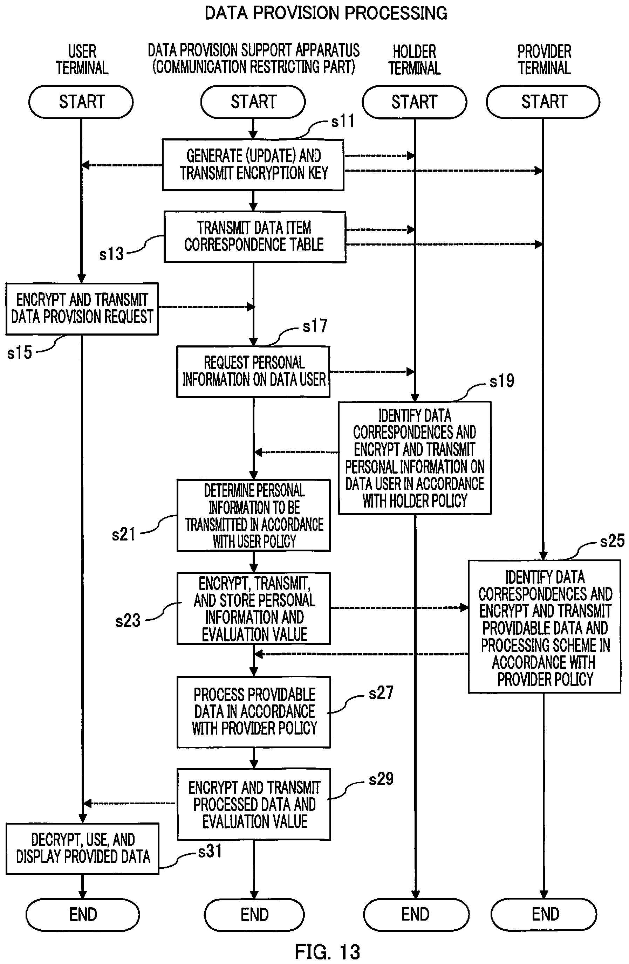

Fig. 13 is a flow diagram for explaining an example of the service support processing in the second embodiment.

The processes at s11 to s21 in Fig. 13 are the same as in the first embodiment. Then, at s23, the service support apparatus 40 calculates the evaluation value for the data user based on the personal information on the data user or the data provision request received from the holder terminal 20.

Specifically, for example, the service support apparatus 40 calculates the evaluation value for the data user based on numeric values specified by the data items in the personal information on the data user received at s21 (for example, income and age), weighting parameters set for the respective data items, the information on the data user contained in the data provision request received at s11 (the usage purpose and the data item), and so on.

Then, the service support apparatus 40 transmits the calculated evaluation value for the data user together with the personal information on the data user determined in the same way as in the first embodiment to the provider terminal 30.

### <User Evaluation Screen 1000>

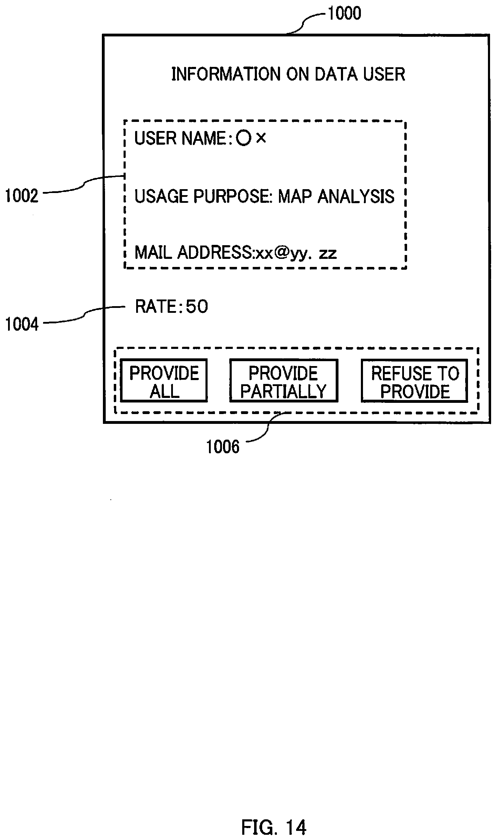

Here, Fig. 14 is a diagram illustrating an example of a screen displayed by the provider terminal 30 having received the evaluation value (hereinafter, referred to as a user evaluation screen). A user evaluation screen 1000 contains a personal information display section 1002 on which the personal information on the data user is displayed in accordance with the user policy and the holder policy, a rating display section 1004 on which the evaluation value for the data user is displayed, and an information provision selection section 1006 which, in a case of providing the providable data to the data user (transmitting it to the service support apparatus 40), receives a selection such as providing all or part of the personal information or refusing to provide the personal information.

The data provider can determine what range of the providable data is to be provided by referring to the personal information and the evaluation value for the data user displayed on the user evaluation screen 1000. Although not illustrated in Fig. 14, the providable data may be provided in accordance with the provider policy as in the first embodiment. In addition, part of the information displayed on the personal information display section 1002 may be omitted depending on the evaluation value.

The provider terminal 30 may automatically calculate a range of provision of the providable data based on the evaluation value. Moreover, in the case of providing the providable data, the providable data may be provided while being hidden partly depending on the evaluation value.

Next, as presented at s25 in Fig. 13, the provider terminal 30 transmits the encrypted providable data to the service support apparatus 40 (for example, in the method specified on the user evaluation screen 1000).

The service support apparatus 40 generates the processed data in the same way as in the first embodiment (s27). Then, the service support apparatus 40 calculates the evaluation value for the data provide based on the received providable data or provider policy (s29).

Specifically, for example, the service support apparatus 40 calculates the evaluation value depending on the kinds and data volume of the received providable data or the types and number of restrictions specified in the provider policy and personal information on the data provider (for example, the business scale of the data provider).

Then, the service support apparatus 40 encrypts the processed data and the calculated evaluation value, and transmits them to the user terminal 10 (s29). The user terminal 10 decrypts the received processed data and evaluation value, and the data user uses the processed data (s31).

### <Provider Evaluation Screen 2000>

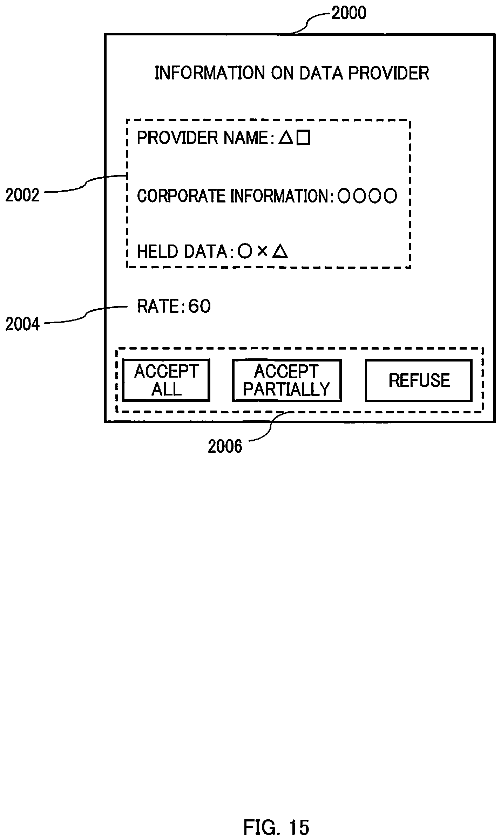

Here, Fig. 15 is a diagram illustrating an example of a screen that the user terminal 10 having received the evaluation value displays (hereinafter, referred to as a provider evaluation screen). The provider evaluation screen 2000 contains a personal information display section 2002 on which the personal information on the data provider is displayed in accordance with the provider policy, a rating display section 2004 on which the evaluation value for the data provider is displayed, and an acceptance section 2006 which receives a selection such as accepting the received processed data or accepting only a part of the processed data.

The data user can determine whether to accept all or part of the processed data or to refuse to accept the processed data by referring to the personal information and the evaluation value for the data provider displayed on the provider evaluation screen 2000. In addition, part of the information displayed on the personal information display section 2002 may be omitted depending on the evaluation value.

The ratings for the data user and the data providers are determined as illustrated on the user evaluation screen 1000 and the provider evaluation screen 2000 in the present embodiment, but only any one of them may be determined.

The above description of the embodiments is for facilitating understanding of the present invention and is not intended to limit the present invention. The present invention may be modified or improved without departing from the gist of the present invention, and the present invention includes its equivalents.

For example, the service support apparatus 40 and the holder terminal 20 may be included in a single unit.

In addition, part or all of the process (s19) performed by the holder terminal 20 to determine the personal information on the data user by referring to the holder policy management table 200 may be performed by the service support apparatus 40.

Similarly, part or all of the process (s25) performed by the provider terminal 30 to transmit the providable data by referring to the provider policy management table 300 may be performed by the service support apparatus 40.

Moreover, the personal information on the data user may be stored in the service support apparatus 40 instead of the holder terminal 20.

Then, the communication restricting part 19 which restricts transmission of data to the outside may be provided to the holder terminal 20 or the provider terminal 30. In this case, the communication restricting part 19 restricts transmission of data generated at s19 and s25 to the outside.

Further, the service support apparatus 40 may skip access to the holder terminal 20 for obtaining the personal information on the data user (for example, the process at s17) .

In addition, the present embodiment is provided with the data item correspondence table 500 in which correspondences are established between the data items in the personal information on the data user in the provider terminal 30 and the data items in the personal information on the data user in the holder terminal 20, and may be also provided with another table for identifying correspondences among the data on the user terminal 10, the holder terminal 20, and the provider terminal 30. For example, it is possible to provide a table in which correspondences between the data items in the request data and the data items in the providable data are written.

Moreover, the encryption key in the present embodiment may not be a fixed key, but may be changed when necessary in such a way as to be updated (changed), for example, for each communication partner or every communication processing. For example, the service support apparatus 40 may update the encryption key every time the processed data is generated according to the data provision request from the user terminal 10 in the service support processing. Moreover, the service support apparatus 40 may use a different encryption key for each user terminal 10, each holder terminal 20, or each provider terminal 30, or update the encryption key for every process in communications with each of these terminals.

The description provided herein reveals at least the following features. Specifically, in the service support system 1 of each of the embodiments, the processed data generating part may generate the processed data in accordance with the user policy, which is a restriction concerning the requester of a data provision request, the provider policy, which is a restriction concerning the provider of the providable data, and the holder policy, which is a restriction concerning the manager who manages the personal information on the requester of the data provision request.

This way of generating processed data in accordance with the user policy, which is a restriction concerning the requester of the data provision request, the provider policy, which is a restriction concerning the provider of the providable data, and the holder policy, which is a restriction concerning the manager who manages the personal information on the requester of the data provision request makes it possible to reflect the desire of each of the data user, the data holder, and the data provider. For example, it is possible to prevent leakage of information such as personal information or business information held by each of them.

Moreover, the service support system 1 of each of the embodiments may include an encryption key generating part which generates a predetermined encryption key, the transmission of which to the outside of the processed data generating part is restricted by the communication restricting part, and be configured such that the data user request obtaining part obtains the data provision request encrypted with an encryption key generated by the encryption key generating part, the personal information obtaining part obtains the personal information on the requester of the data provision request encrypted with an encryption key generated by the encryption key generating part, the providable data obtaining part obtains the providable data encrypted with an encryption key generated by the encryption key generating part, and the processed data generating part encrypts the generated processed data with an encryption key generated by the encryption key generating part.

This way of encrypting the data provision request, the personal information on the requester of the data provision request (the personal information on the data user), the providable data, and the processed data with the encryption keys, the transmission of which to the outside of processed data generating part 44 is restricted by the communication restricting part 49, makes it possible to prevent these kinds of information from being leaked to the outside (including any part other than the processed data generating part 44 in the service support apparatus 40).

Moreover, in the service support system 1 of each of the embodiments, the encryption key generating part may update the generated encryption key to generate a new encryption key after the processed data generating part generates the processed data.

This way of updating the encryption key to generate a new encryption key after the processed data is generated makes it possible to reduce a risk of personal information leakage, for example, even if data provision requests and provision of providable data are repeated.

Moreover, the service support system 1 of each of the embodiments may include a provider terminal which stores the provider policy, a holder terminal which stores the personal information on the requester of the data provision request, and a correspondence storing part which stores correspondences between data items used in the provider policy and data items used in the holder policy, and the processed data generating part may identify correspondences between the provider policy and the holder policy based on the above correspondences and thereby generate the processed data in accordance with the provider policy and the holder policy.

This configuration of identifying the correspondences between the provider policy and the holder policy by using the above correspondences (data item correspondence table 500) makes it possible to provide data containing appropriate contents to the data user even when data items in information managed by the data provider are different from data items in information managed by the data holder.

Moreover, the service support system 1 of each of the embodiments may include a holder terminal which stores the personal information on the requester of a data provision request, and a user terminal which transmits the data provision request, and the processed data generating part may include an evaluation value calculating part which receives the personal information on the requester of the data provision request from the holder terminal, and which calculates an evaluation value for the requester of the data provision request based on the received personal information on the requester or the data provision request.

This way of calculating the evaluation value for the requester of the data provision request (data user) based on the information on the requester (the personal information on the data user) or the data provision request received from the holder terminal 20 (determining the rating of the data user) encourages the data provider or the like to make appropriate determination concerning data provision.

In addition, the service support system 1 of each of the embodiments may include a provider terminal which store the providable data and the provider policy, and the processed data generating part may include an evaluation value calculating part which receives the providable data and the provider policy from the provider terminal, and which calculates an evaluation value for the provider of the providable data based on the received providable data or provider policy.

This way of calculating the evaluation value for the provider of the providable data (data provider) based on the providable data or the provider policy received from the provider terminal 30 (determining the rating of the data provider) encourages the data user or the like to make appropriate determination concerning data usage.

Further, in the service support system 1 of each of the embodiments, the processed data generating part may encrypt and store the personal information on the requester of the data provision request.

When the personal information on the requester of the data provision request (data user) is encrypted and stored, it is possible to protect the personal information on the data user.

### [Reference Signs List]

- 1: service support system
- 10: user terminal
- 20: holder terminal
- 30: provider terminal
- 40: service support apparatus
- 41: data user request obtaining part
- 42: personal information obtaining part
- 43: providable data obtaining part
- 44: processed data generating part
- 49: communication restricting part

## Claims

1. A service support system comprising:
a data user request obtaining part that obtains a predetermined data provision request from a predetermined terminal;
a personal information obtaining part that obtains personal information on a requester of the data provision request;
a providable data obtaining part that obtains predetermined providable data from a predetermined terminal;
a processed data generating part that generates processed data which is data of a response to the data provision request by processing the obtained providable data based on the obtained personal information on the requester; and
a communication restricting part that restricts transmission of the obtained data provision request, the obtained personal information on the requester, and the generated processed data to outside of the processed data generating part.

2. The service support system according to claim 1, wherein the processed data generating part generates the processed data in accordance with user policy, which is a restriction concerning the requester of the data provision request, provider policy, which is a restriction concerning the provider of the providable data, and a holder policy which is a restriction concerning a manager who manages the personal information on the requester of the data provision request.

3. The service support system according to claim 1 comprising an encryption key generating part that generates a predetermined encryption key, transmission of which to outside of the processed data generating part is restricted by the communication restricting part, wherein
the data user request obtaining part obtains the data provision request encrypted with an encryption key generated by the encryption key generating part,
the personal information obtaining part obtains the personal information on the requester of the data provision request encrypted with an encryption key generated by the encryption key generating part,
the providable data obtaining part obtains the providable data encrypted with an encryption key generated by the encryption key generating part,
the processed data generating part encrypts the generated processed data with an encryption key generated by the encryption key generating part.

4. The service support system according to claim 3, wherein the encryption key generating part updates the generated encryption key to generate a new encryption key after the processed data generating part generates the processed data.

5. The service support system according to claim 2 comprising a provider terminal that stores the provider policy, a holder terminal that stores the personal information on the requester of the data provision request, and a correspondence storing part that stores a correspondence between a data item used in the provider policy and a data item used in the holder policy, wherein
the processed data generating part identifies, based on the correspondence, a correspondence between the provider policy and the holder policy, and thereby generates the processed data in accordance with the provider policy and the holder policy.

6. The service support system according to claim 2 comprising a holder terminal that stores the personal information on the requester of the data provision request, and a user terminal that transmits the data provision request, wherein
the processed data generating part includes an evaluation value calculating part that receives the personal information on the requester of the data provision request from the holder terminal, and calculates an evaluation value for the requester of the data provision request based on the received personal information on the requester or the data provision request.

7. The service support system according to claim 2 comprising a provider terminal that stores the providable data and the provider policy, wherein
the processed data generating part includes an evaluation value calculating part that receives the providable data and the provider policy from the provider terminal and calculates an evaluation value for the provider of the providable data based on the received providable data or provider policy.

8. The service support system according to claim 1, wherein the personal information obtaining part encrypts and stores the personal information on the requester of the data provision request.

9. A service support method implemented by a service support system including a processor and a memory comprising:
a data user request obtaining process of obtaining a predetermined data provision request from a predetermined terminal;
a personal information obtaining process of obtaining personal information on a requester of the data provision request;
a providable data obtaining process of obtaining predetermined providable data from a predetermined terminal; and
a processed data generation process of generating processed data which is data of a response to the data provision request by processing the obtained providable data based on the personal information on the requester, each of the above processes being executed at a predetermined processing part of the service support system, and
a communication restriction process of restricting transmission of the obtained data provision request, the obtained personal information on the requester, and the generated processed data to outside of the predetermined processing part.

10. The service support method according to claim 9, wherein
in the processed data generation process, the service support system generates the processed data in accordance with user policy, which is a restriction concerning the requester of the data provision request, provider policy, which is a restriction concerning the provider of the providable data, and holder policy, which is a restriction concerning a manager who manages the personal information on the requester of the data provision request.

11. The service support method according to claim 9, wherein the service support system
executes an encryption key generation process of generating a predetermined encryption key, transmission of which to outside of the processed data generating part is restricted by the predetermined processing part,
obtains the data provision request encrypted with an encryption key generated by the encryption key generating part in the data user request obtaining process,
obtains the personal information on the requester of the data provision request encrypted with an encryption key generated by the encryption key generating part in the personal information obtaining process,
obtains the providable data encrypted with an encryption key generated by the encryption key generating part in the providable data obtaining process, and
encrypts the generated processed data with an encryption key generated by the encryption key generating part in the processed data generation process.

12. The service support method according to claim 11, wherein after the processed data generating part generates the processed data, the service support system updates the generated encryption key to generate a new encryption key in the encryption key generation process.

13. The service support method according to claim 10, wherein
the service support system includes a provider terminal that stores the provider policy, a holder terminal that stores the personal information on the requester of the data provision request, and a correspondence storing part that stores a correspondence between a data item used in the provider policy and a data item used in the holder policy, and
in the processed data generation process, the service support system identifies, based on the correspondence, a correspondence between the provider policy and the holder policy and thereby generates the processed data in accordance with the provider policy and the holder policy.

14. The service support method according to claim 10, wherein
the service support system includes a holder terminal that stores the personal information on the requester of the data provision request, a user terminal that transmits the data provision request, and an evaluation value calculating part that receives the personal information on the requester of the data provision request from the holder terminal, and calculates an evaluation value for the requester of the data provision request based on the received personal information on the requester or the data provision request in the processed data generation process.

15. The service support method according to claim 10, wherein
the service support system includes a provider terminal that stores the providable data and the provider policy, and an evaluation value calculating part that receives the providable data and the provider policy from the provider terminal and calculates an evaluation value for the provider of the providable data based on the received providable data or provider policy in the processed data generation process.
